# EUROPÄISCHE PATENTSCHRIFT

(11) **EP 2 937 745 B1**
(45) Veröffentlichungstag und Bekanntmachung des Hinweises auf die Patenterteilung: **05.10.2016**
(21) Anmeldenummer: 14166081.1
(22) Anmeldetag: 25.04.2014
(51) Int. Cl.: G05B 9/02

(54) **Sicherheitssteuerung zum sicheren Betreiben einer technischen Anlage und Verfahren zum Betreiben der Sicherheitssteuerung**
Safety control system for safe operation of a technical installation and method for operating the safety control system
Commande de sécurité destinée au fonctionnement sécurisé d'une installation technique et procédé de fonctionnement de la commande de sécurité

(43) Veröffentlichungstag der Anmeldung: 28.10.2015
(73) Patentinhaber: SICK AG, 79183 Waldkirch (DE)
(72) Erfinder: Saumer, Markus, 77948 Friesenheim (DE)
(74) Vertreter: Ludewigt, Christoph

(56) Entgegenhaltungen:
- US-A1- 2009 281 711

## Beschreibung

Die Erfindung betrifft eine Sicherheitssteuerung gemäß dem Oberbegriff des Anspruchs 1 und ein Verfahren zum Betreiben der Sicherheitssteuerung gemäß dem Oberbegriff des Anspruchs 4.

In der heutigen Industrie nimmt der Automatisierungsgrad einer technischen Anlage stetig zu, wobei eine Anforderung an einen sicheren Betrieb der automatisierten technischen Anlage ebenfalls höher gelegt wird. Die Sicherheitsanforderung wird z.B. in der Norm EN ISO 13849-1, IEC 62061 oder dergleichen beschrieben.

Die technische Anlage besteht im Wesentlichen aus zumindest einem Aktor, der die automatisierten Arbeiten durchführt, zumindest einem Signalgeber, vorzugsweise einem sicheren Sensor, der den Aktor überwacht, und aus einer Sicherheitssteuerung, die den Aktor mit dem Signalgeber verbindet und den Aktor entsprechend den Signalen des Signalgebers und einem Prozessprogramm ansteuert.

Hierbei sind der Signalgeber mit zumindest einem Eingang und der Aktor mit zumindest einem Ausgang der Sicherheitssteuerung verbunden.

Die Signale des Signalgebers werden dem zumindest einen Eingang der Sicherheitssteuerung zur weiteren Verarbeitung bzw. Auswertung zugeführt, so dass sich der Eingang der Sicherheitssteuerung als eine Stromsenke darstellt.

Mit der zunehmenden Automatisierung wird die Anzahl der verwendeten Signalgeber ebenfalls erhöht, so dass eine zunehmende Packungsdichte an Signalgebern an den Eingängen der Sicherheitssteuerung zu einer nichtvernachlässigbaren Verlustleistung durch Strom an den Eingängen der Sicherheitssteuerung führt.

Es ist daher eine Aufgabe der Erfindung, eine Sicherheitssteuerung zum sicheren Betreiben einer technischen Anlage derart zu verbessern, dass eine Reduzierung der Verlustleistung an den Eingängen der Sicherheitssteuerung erzielbar ist. Es ist ferner eine Aufgabe der vorliegenden Erfindung, ein Verfahren zum Betreiben der Sicherheitssteuerung zur Verfügung zu stellen, so dass die Sicherheitssteuerung energiesparend arbeitet.

Die Aufgabe wird erfindungsgemäß gelöst durch eine Sicherheitssteuerung mit den Merkmalen des unabhängigen Anspruchs 1.

Dies hat den Vorteil, dass nur dann eine Verlustleistung an dem Eingang der Sicherheitssteuerung entsteht, wenn das Schaltelement geschlossen ist, so dass das Signal des Signalgebers eingelesen wird. Nach dem Einlesen des Signals des Signalgebers ist die Verlustleistung durch das Öffnen des Schaltelements aufgehoben. Hierbei erkennt die Steuereinheit einen Fehlerzustand des Schaltelements bzw. der Eingangseinheit, wenn nach dem Schließen bzw. Öffnen des Schaltelements z.B. ein Signallevel, ein Status-Pin oder dergleichen sich nicht verändert, insbesondere von High auf Low bzw. vice versa.

Erfindungsgemäß ist das Schaltelement periodisch, insbesondere in zeitdiskreten Abständen, von der Steuereinheit ansteuerbar. Hierbei muss ein eventueller Einschwingvorgang des Signals des Signalgebers durch das Schalten des Schaltelements durch die Steuereinheit beim Einlesen abgeschlossen sein.

Gemäß einem weiteren bevorzugten Ausführungsbeispiel ist das Schaltelement ein elektronischer oder ein elektromechanischer Schalter.

Die oben genannte Aufgabe wird erfindungsgemäß weiterhin gelöst durch ein Verfahren zum Betreiben einer Sicherheitssteuerung mit den Merkmalen des unabhängigen Anspruchs 4.

Hierbei wird vorteilhafterweise ein Fehler des Schaltelements und/oder der Eingangseinheit nach dem Schließen bzw. Öffnen des Schaltelements von der Steuereinheit festgestellt, wenn trotz eines Schließens bzw. Öffnens des Schaltelements ein Signallevel, ein Status-Pin oder dergleichen unverändert erhalten bleibt.

Erfindungsgemäß schließt bzw. öffnet die Steuereinheit das Schaltelement periodisch, insbesondere in zeitdiskreten Abständen.

Die erfindungsgemäße Vorrichtung bzw. das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer technischen Automatisierungsanlage;
- Fig. 2: die schematische Detaildarstellung des erfindungsgemäßen Eingangs der Sicherheitssteuerung;
- Fig. 3: ein schematisches Diagramm eines herkömmlichen Zusammenhangs zwischen dem Signal des Signalgebers und dem Stromfluss bzw. der Verlustleistung am Eingang der Sicherheitssteuerung;
- Fig. 4: ein schematisches Diagramm eines erfindungsgemäßen Zusammenhangs zwischen dem Signal des Signalgebers und dem Stromfluss bzw. der Verlustleistung am Eingang der erfindungsgemäßen Sicherheitssteuerung.

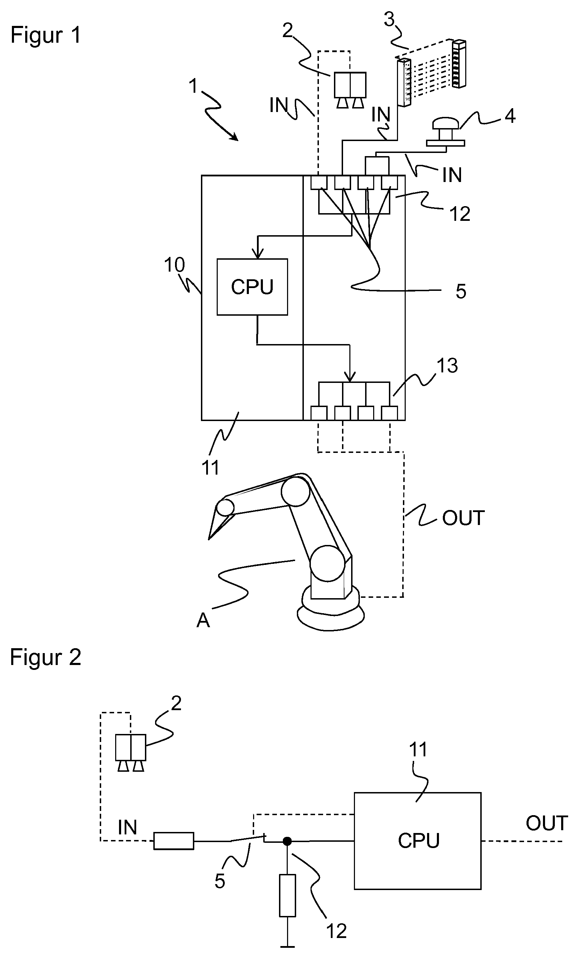

Figur 1 zeigt eine schematische Darstellung einer technischen Automatisierungsanlage 1, die einen Roboterarm als Aktor A zum Durchführen automatisierter Prozesse aufweist. Der Aktor A ist mittels zumindest eines Signalgebers 2, 3, 4 in der Durchführung seiner Arbeit überwacht.

Hierbei ist der Signalgeber 2, 3, 4 ein optoelektronischer Sensor, ein Notausschalter oder dergleichen. In dem gezeigten Ausführungsbeispiel ist der Aktor A durch eine Kamera 2, ein Lichtgitter 3 und einen Notausschalter 4 überwacht.

Der Signalgeber 2, 3, 4 und der Aktor A sind über eine Sicherheitssteuerung 10 zum sicheren Betreiben der technischen Anlage 1 miteinander verbunden, wobei der Signalgeber 2, 3, 4 mit zumindest einer Eingangseinheit 12 der Sicherheitssteuerung 10 und der Aktor A mit zumindest einer Ausgangseinheit 13 der Sicherheitssteuerung 10 verbunden ist.

Die Eingangseinheit 12 der Sicherheitssteuerung 10 ist zum Empfangen eines Signals IN von dem angeschlossenen Signalgeber 2, 3, 4 der technischen Anlage 1 vorgesehen.

Die Ausgangseinheit 13 ist zum Aussenden eines erzeugten Steuerbefehls OUT an dem angeschlossenen Aktor A der technischen Anlage 1 vorgesehen.

Die Sicherheitssteuerung 10 umfasst hierbei eine Steuereinheit 11, die zum Einlesen des von der Eingangseinheit 12 empfangenen Signals IN und zum Erzeugen des an dem Aktor A ausgesendeten Steuerbefehls OUT vorgesehen ist.

Somit wird die technische Anlage 1 gemäß den Sicherheitsnormen EN ISO 13849-1, IEC 62061 oder dergleichen durch die Sicherheitssteuerung 10 sicher betrieben, indem die Signalgeber 2, 3, 4 sicherheitsgerichtete Signale IN bzgl. des Aktors A an die Eingangseinheit 12 der Sicherheitssteuerung 10 sendet. Die sicherheitsgerichteten Signale In werden von der Eingangseinheit 12 der Sicherheitssteuerung 10 an die Steuereinheit 11 der Sicherheitssteuerung 10 weitergeleitet, so dass die Steuereinheit 11 der Sicherheitssteuerung 10 entsprechende Steuerbefehle OUT erzeugt und an die Ausgangseinheit 13 der Sicherheitssteuerung 10 versendet. Die Ausgangseinheit 13 der Sicherheitssteuerung 10 sendet die Steuerbefehle OUT an den Aktor A der technischen Anlage 1, so dass dieser entsprechend den Steuerbefehlen OUT verfährt.

Erfindungsgemäß weist die Eingangseinheit 12 eingangsseitig ein Schaltelement 5 auf, so dass der Signalgeber 2, 3, 4 über das Schaltelement 5 an die Eingangseinheit 12 angeschlossen ist.

Das Schaltelement 5 ist durch die Steuereinheit 11 der Sicherheitssteuerung 10 ansteuerbar.

Eine schematische Detaildarstellung solch einer erfindungsgemäßen Ausgestaltung des Eingangs der Sicherheitssteuerung 10 ist in der Figur 2 dargestellt.

Hierbei ist beispielhaft der Signalgeber in Form der Kamera 2 an dem Schaltelement 5 angeschlossen, das eingangsseitig der Eingangseinheit 12 der Sicherheitssteuerung 10 angeordnet ist und mittels der Eingangseinheit 12 der Sicherheitssteuerung 10 mit der Steuereinheit 11 verbunden ist. Das Schaltelement 5 ist ein elektronischer oder ein elektromechanischer Schalter, der von der Steuereinheit 11 der Sicherheitssteuerung 10 ansteuerbar ist.

Gemäß der Anordnung sendet der Signalgeber bzw. die Kamera 2 das erfasste Signal IN an die Eingangseinheit 12 der Sicherheitssteuerung 10.

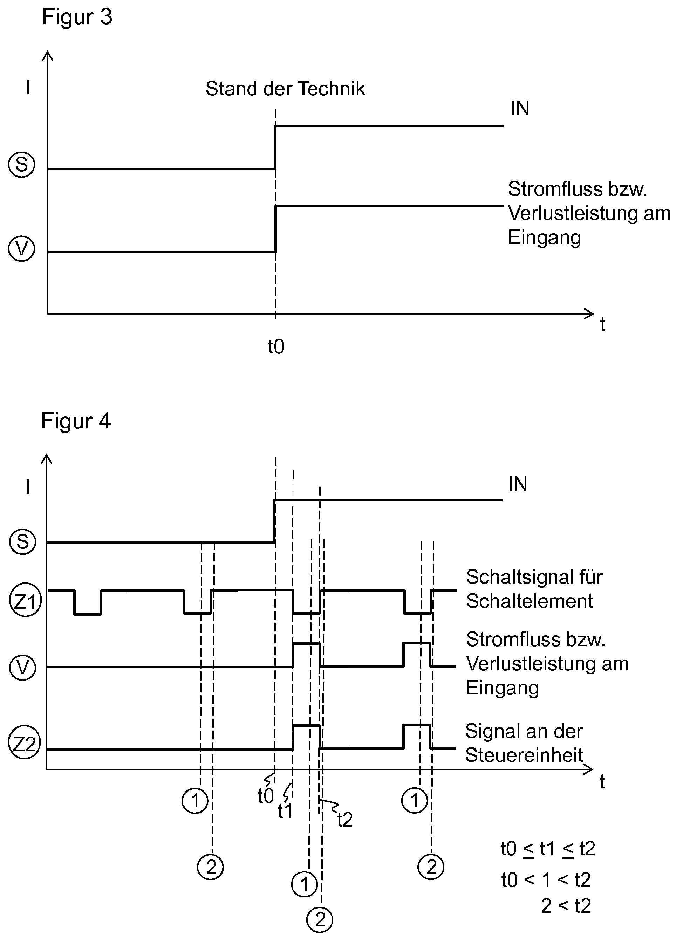

Entsprechend des herkömmlichen Stands der Technik ohne das erfindungsgemäße Schaltelement 5 der Eingangseinheit 12 der Sicherheitssteuerung 10, wie in Figur 3 gezeigt, bewirkt das Signal IN des Signalgebers 2, wie in der Kurve S dargestellt, ab einem Zeitpunkt t0 einen Stromfluss bzw. eine Verlustleistung, wie in der Kurve V dargestellt, an der Eingangseinheit 12 der Sicherheitssteuerung 10, da diese als eine Stromsenke fungiert. Die Verlustleistung bleibt ab dem Zeitpunkt t0 solange bestehen, wie das Signal IN des Signalgebers 2, 3, 4 am Eingang der Sicherheitssteuerung 10 anliegt.

Bei einer immer komplexeren sicheren technischen Anlage 1, d.h. eine durch höhere Anzahl an Signalgeber 2, 3, 4 intensivere Überwachung, ergibt sich eine höhere summierte Verlustleistung am Eingang der Sicherheitssteuerung 10.

Um eine Reduzierung der genannten Verlustleistung zu erzielen, ist in der Figur 4 eine zeitliche Darstellung des Betriebs der erfindungsgemäßen Sicherheitssteuerung 10 mit dem Schaltelement 5 der Eingangseinheit 12 dargestellt.

In der Figur 4 ist wie in der Figur 3 die Intensität I der Parameter über die Zeit t aufgetragen.

In der Kurve S ist erneut die Intensität des Signals IN des Signalgebers 2, 3, 4 dargestellt, wobei die Intensität sich von einem Wert Null auf einen Wert ungleich Null ab dem Zeitpunkt t0 verändert. D.h. ab dem Zeitpunkt t0 stellt der Signalgeber 2, 3, 4 der Eingangseinheit 12 der Sicherheitssteuerung 10 ein Signal zur Verfügung.

In der Kurve Z1 ist die Ansteuerung der Steuereinheit 11 der Sicherheitssteuerung 10 an das Schaltelement 5 der Eingangseinheit 12 dargestellt, bei der das Schaltelement 5 periodisch, insbesondere in zeitdiskreten Abständen, von der Steuereinheit 11 der Sicherheitssteuerung 10 ansteuerbar ist bzw. angesteuert wird.

Hierbei wird das Schaltelement 5 der Eingangseinheit 12, wie in der Kurve Z1 gezeigt, durch die Steuereinheit 11 der Sicherheitssteuerung 10 wiederholt durch ein Schaltsignal betätigt.

Vor dem Zeitpunkt t0 ist trotz der Schaltsignale (Kurve Z1 bei t < t0) der Steuereinheit 11 an das Schaltelement 5 keine Veränderung in der Eingangseinheit 12 bzw. in der Sicherheitssteuerung 10 an sich feststellbar.

Ab dem Zeitpunkt t0 und zum Zeitpunkt t1, wobei t1 größer als t0 ist, bewirkt das Schaltsignal der Steuereinheit 11 eine Betätigung, insbesondere ein Schließen, des Schaltelements 5 nach dem Bereitstellen des Signals IN des Signalgebers 2, 3, 4 an die Sicherheitssteuerung 10, so dass die Verbindung zwischen dem Signalgeber 2, 3, 4 und der Eingangseinheit 12 hergestellt bzw. geschlossen ist.

Daraus ergibt sich ein Stromfluss bzw. eine Verlustleistung an der Eingangseinheit 12 der Sicherheitssteuerung 10, wobei das Signal IN des Signalgebers 2, 3, 4 ab dem Zeitpunkt t1 für die Steuereinheit 11 der Sicherheitssteuerung 10 einlesbar ist - wie in der Kurve V gezeigt.

D.h. das Schaltelement 5 der Eingangseinheit 12 ist bzw. wird unmittelbar vor dem Einlesen des vom Signalgeber 2, 3, 4 empfangenen und zur Verfügung gestellten Signals IN von der Steuereinheit 11 betätigbar, insbesondere schließbar, bzw. betätigt, insbesondere geschlossen - Kurve Z2 zum Zeitpunkt t1.

Nach einer vorgegebenen zeitlichen Periode und zum Zeitpunkt t2 betätigt, insbesondere öffnet, die Steuereinheit 11 der Sicherheitssteuerung 10 erneut das Schaltelement 5 der Eingangseinheit 12, so dass die Verbindung zwischen dem Signalgeber 2, 3, 4 und der Eingangseinheit 12 unterbrochen ist bzw. wird - Kurve Z1 zum Zeitpunkt t2.

Hierdurch wird der Stromfluss an der Eingangseinheit 12 der Sicherheitssteuerung 10 beendet, wobei die Verlustleistung am Eingang der Sicherheitssteuerung 10 unterbunden ist - Kurve V zum Zeitpunkt t2.

Somit ist im Gegensatz zum herkömmlichen Stand der Technik eine signifikante Reduzierung der Verlustleistung am Eingang der Sicherheitssteuerung 10 trotz eines Vorhandenseins des Signals IN des Signalgebers 2, 3, 4 durch Betätigung des Schaltelements 5 der Eingangseinheit 12 erzielbar.

Die eingesparte Verlustleistung stellt vorteilhafterweise Energie zur Verfügung, so dass das Schalten des Schaltelements 5 der Eingangseinheit 12 mit größeren Strömen bzw. höheren Stromwerten ohne Mehrverbrauch durchgeführt werden kann. Dies ermöglicht zusätzlich den Vorteil einer verbesserten Störfestigkeit bzw. Robustheit der Eingangseinheit 12.

Ferner wird zum Zeitpunkt (1), der zwischen dem Zeitpunkt t1 und t2 liegt, von der Steuereinheit 11 der Sicherheitssteuerung 10 das Einlesen des Signals IN des Signalgebers 2, 3, 4 gestartet. Das zu diesem Zeitpunkt (1) eingelesene Signal IN wird von der Steuereinheit 11 verarbeitet, so dass ein Steuerbefehl OUT erzeugt und über die Ausgangseinheit 13 an den Aktor A versendet werden kann.

Durch das Einlesen des Signals IN des Signalgebers 2, 3, 4 zum Zeitpunkt (1) ist gewährleistet, dass ein möglicher Einschwingvorgang des Signals IN und des Schaltsignals für das Schaltelement 5 der Eingangseinheit 12, wie in der Kurve Z1 der Figur 4 gezeigt, keinen störenden Einfluss auf die Auswertung nehmen kann. D.h. es ist gewährleistet, dass ein möglicher Einschwingvorgang beim Einlesen des Signals IN beendet ist.

Nach der erneuten Betätigung, insbesondere dem Öffnen, des Schaltelements 5 der Eingangseinheit 12 zum Zeitpunkt t2 ist die Steuereinheit 11 ausgebildet, zum Zeitpunkt (2) ein Signallevel, ein Status-Pin oder dergleichen der Verbindung zwischen dem Signalgeber 2, 3, 4 und der Eingangseinheit 12 der Sicherheitssteuerung 10 einzulesen. Hierbei wird anhand des Signallevels, des Status-Pins oder dergleichen von der Steuereinheit 11 ermittelt, ob die Verbindung zwischen dem Signalgeber 2, 3, 4 und der Eingangseinheit 12 der Sicherheitssteuerung 10 oder das Schaltelement 5 der Eingangseinheit 12 fehlerfrei ist.

D.h. zum Zeitpunkt (2) ermittelt die Steuereinheit 11 mittels der Kurve V des Stromflusses bzw. der Verlustleistung oder der Kurve Z2, ob durch die Betätigung des Schaltelements 5 das Signallevel, der Status-Pin oder dergleichen sich verändert hat oder nicht.

Falls sich trotz der Betätigung des Schaltelements 5 durch die Steuereinheit 11 der Sicherheitssteuerung 10 keine Veränderung in den Kurven V bzw. Z2 nach dem Zeitpunkt t2 ergibt, erkennt die Steuereinheit 11 der Sicherheitssteuerung 10, dass die Verbindung zwischen dem Signalgeber 2, 3, 4 und der Eingangseinheit 12 der Sicherheitssteuerung 10 oder das Schaltelement 5 der Eingangseinheit 12 selbst nicht ordnungsgemäß funktioniert, so dass ein Fehlerfall vorliegt.

Somit kann anhand eines Feedbacks des Zustandes des Schaltelements 5 unmittelbar nach der Betätigung desselben eine sichere fehlerfreie Betriebsbereitschaft des Schaltelements 5 der Eingangseinheit 12 und der Eingangseinheit 12 an sich ermittelt werden.

**Bezugszeichenliste**

| | | | |
|---|---|---|---|
| 1 | Technische Anlage | A | Aktor |
| 2 | Signalgeber (Kamera) | IN | Signal des Signalgebers |
| 3 | Signalgeber (Lichtgitter) | OUT | Steuerbefehl |
| 4 | Signalgeber (Not-Austaste) | t0, t1, t2 | Zeitpunkt |
| 5 | Schaltelement | (1), (2) | Einlese-Zeitpunkt |
| 10 | Sicherheitssteuerung | | |
| 11 | Steuereinheit | | |
| 12 | Eingangseinheit | | |
| 13 | Ausgangseinheit | | |

## Patentansprüche

1. Sicherheitssteuerung (10) zum sicheren Betreiben einer technischen Anlage (1), umfassend zumindest eine Eingangseinheit (12) zum Empfangen eines Signals (IN) zumindest eines angeschlossenen Signalgebers (2, 3, 4) der technischen Anlage (1), eine Steuereinheit (11) zum Einlesen des empfangenen Signals (IN) und zum Erzeugen eines Steuerbefehls (OUT), und zumindest eine Ausgangseinheit (13) zum Aussenden des erzeugten Steuerbefehls (OUT) an zumindest einen angeschlossenen Aktor (A) der technischen Anlage (1), **dadurch gekennzeichnet, dass** die Eingangseinheit (12) eingangsseitig ein Schaltelement (5) aufweist, das durch die Steuereinheit (11) ansteuerbar ist und derart ausgebildet ist, dass das Schaltelement (5) periodisch, insbesondere in zeitdiskreten Abständen, von der Steuereinheit (11) ansteuerbar ist und unmittelbar vor dem Einlesen des empfangenen Signals (IN) von der Steuereinheit (11) betätigbar, insbesondere schließbar, ist und nach dem Einlesen des empfangenen Signals (IN) von der Steuereinheit (11) erneut betätigbar, insbesondere öffnenbar, ist,
wobei die Steuereinheit (11) ausgebildet ist, aus einer Betätigung, insbesondere einem Schließen und Öffnen, des Schaltelements (5) einen Zustand der Eingangseinheit (12) zu ermitteln.

2. Sicherheitssteuerung (10) nach Anspruch 1, **dadurch gekennzeichnet, dass** das Schaltelement (5) ein elektronischer oder ein elektromechanischer Schalter ist.

3. Verfahren zum Betreiben einer Sicherheitssteuerung (10) mit zumindest einer Eingangseinheit (12) zum Empfangen eines Signals (IN) zumindest eines angeschlossenen Signalgebers (2, 3, 4) einer technischen Anlage (1), einer Steuereinheit (11) zum Einlesen des empfangenen Signals (IN) und zum Erzeugen eines Steuerbefehls (OUT) und zumindest einer Ausgangseinheit (13) zum Aussenden des erzeugten Steuerbefehls (OUT) an zumindest einen angeschlossenen Aktor (A) der technischen Anlage (1), wobei das Signal (IN) des Signalgebers (2, 3, 4) an die Eingangseinheit (12) gesendet wird, **dadurch gekennzeichnet, dass** die Steuereinheit (11) ein auf einer Eingangsseite der Eingangseinheit (12) angeordnetes Schaltelement (5) periodisch, vorzugsweise in zeitdiskreten Abständen, betätigt, insbesondere schließt und öffnet, so dass das Signal (IN) eingelesen wird, und danach das Schaltelement (5) wieder betätigt, insbesondere geöffnet wird, so dass die Eingangseinheit (12) von dem Signalgeber (2, 3, 4) getrennt wird,
wobei die Steuereinheit (11) einen Zustand des Schaltelements (5) beim Schließen und Öffnen vergleicht und daraus eine sichere fehlerfreie Betriebsbereitschaft des Schaltelements (5) und der Eingangseinheit (12) ermittelt.

4. Verfahren nach Anspruch 3, **dadurch gekennzeichnet, dass** nach dem Ein- bzw. Ausschalten des Schaltelements (5) die Steuereinheit (11) einen Fehler des Schaltelements (5) bzw. der Eingangseinheit (12) bestimmt, wenn ein Signallevel, ein Status-Pin oder dergleichen des Schaltelements (5) bzw. der Eingangseinheit (12) unverändert bleibt.

## Claims

1. A safety controller (10) for the safe operation of a technical system (1), comprising at least one input unit (12) for receiving a signal (IN) of at least one connected signal generator (2, 3, 4) of the technical system (1); a control, unit (11) for reading in the received signal (IN) and for generating a control command (OUT); and at least one output unit (13) for transmitting the generated control command (OUT) to at least one connected actuator (A) of the technical system (1), **characterized in that** the input unit (12) has a switching element (5) at the input side which switching element is controllable by the control unit (11) and which is configured such that the switching element (5) can be controlled periodically, in particular at discrete time intervals, by the control unit (11) and can be actuated, in particular closed, directly before the reading in of the received signal (IN) by the control unit (11) and can be actuated, in particular opened, again after the reading in of the received signal (IN) by the control unit (11),
wherein the control unit (11) is configured to determine a condition of the input unit (12) from an actuation, in particular from a closing and opening, of the switching element (5).

2. A safety controller (10) in accordance with claim 1, **characterized in that** the switching element (5) is an electronic switch or an electromechanical switch.

3. A method of operating a safety controller (10) having at least one input unit (12) for receiving a signal (IN) of at least one connected signal generator (2, 3, 4) of a technical system (1); a control unit (11) for reading in the received signal (IN) and for generating a control command (OUT); and at least one output unit (13) for transmitting the generated control command (OUT) to at least one connected actuator (A) of the technical system (1), wherein the signal (IN) of the signal generator (2, 3, 4) is transmitted to the input unit (12), **characterized in that** the control unit (11) actuates, in particular closes and opens, a switching element (5) arranged at an input side of the input unit (12) periodically, preferably at discrete time intervals, such that the signal (IN) is read in and the switching element (5) is then actuated, in particular opened again, such that the input unit (12) is separated from the signal generator (2, 3,4),
wherein the control unit (11) compares a condition of the switching element (5) on the closing and opening and determines a safe error-free operating readiness of the switching element (5) and of the input unit (12) from it.

4. A method in accordance with claim 3, **characterized in that** the control unit (11) determines an error of the switching element (5) or of the input unit (12) after the switching on or off of the switching element (5) when a signal level, a status pin or the like of the switching element (5) or of the input unit (12) remains unchanged.

## Revendications

1. Dispositif de commande de sécurité (10) destiné au fonctionnement sécurisé d'une installation technique (1), comportant au moins une unité d'entrée (12) destinée à recevoir un signal (IN) d'au moins un émetteur de signal connecté (2, 3, 4) de l'installation technique (1), une unité de commande (11) destinée à lire le signal reçu (IN) et à générer un ordre de commande (OUT), et au moins une unité de sortie (13) destinée à envoyer l'ordre de commande généré (OUT) à au moins un actionneur connecté (A) de l'installation technique (1),
**caractérisé en ce que**
l'unité d'entrée (12) comprend du côté entrée un élément de commutation (5) qui est pilotable par l'unité de commande (11) et réalisé de telle sorte que l'élément de commutation (5) est pilotable périodiquement, en particulier à des intervalles temporels discret, par l'unité de commande (11) et est susceptible d'être actionné, en particulier fermé, par l'unité de commande (11) directement avant de lire le signal reçu (IN), et est susceptible d'être ré-actionné, en particulier ouvert, par l'unité de commande (11) après avoir lu le signal reçu (IN),
l'unité de commande (11) étant réalisée pour déterminer un état de l'unité d'entrée (12) à partir d'un actionnement, en particulier d'une fermeture et d'une ouverture de l'élément de commutation (5).

2. Dispositif de commande de sécurité (10) selon la revendication 1, **caractérisé en ce que** l'élément de commutation (5) est un commutateur électronique ou électromécanique.

3. Procédé pour faire fonctionner un dispositif de commande de sécurité (10) comportant au moins une unité d'entrée (12) destinée à recevoir un signal (IN) d'au moins un émetteur de signal connecté (2, 3, 4) d'une installation technique (1), une unité de commande (11) destinée à lire le signal reçu (IN) et à générer un ordre de commande (OUT), et au moins une unité de sortie (13) destinée à envoyer l'ordre de commande généré (OUT) à au moins un actionneur connecté (A) de l'installation technique (1), le signal (IN) de l'émetteur de signal (2, 3, 4) étant envoyé à l'unité d'entrée (12), **caractérisé en ce que** l'unité de commande (11) actionne, en particulier ferme ou ouvre, périodiquement, en particulier à des intervalles temporels discrets, un élément de commutation (5) agencé sur un côté entrée de l'unité d'entrée (12), de sorte que le signal (IN) est lu, et ensuite elle réactionne, en particulier ouvre, l'élément de commutation (5), de sorte que l'unité d'entrée (12) est séparée de l'émetteur de signal (2, 3, 4),
dans lequel l'unité de commande (11) compare un état de l'élément de commutation (5) lors de la fermeture et de l'ouverture et en détermine une disponibilité au fonctionnement sûre sans erreur de l'élément de commutation (5) et de l'unité d'entrée (12).

4. Procédé selon la revendication 3, **caractérisé en ce qu'**après la mise en marche ou la coupure de l'élément d'actionnement (5) l'unité de commande (11) détermine une erreur de l'élément de commutation (5) ou de l'unité d'entrée (12) lorsqu'un niveau de signal, un code d'état ou similaire de l'élément de commutation (5) ou de l'unité d'entrée (12) reste inchangé.
